(19) Europäisches Patentamt
European Patent Office
Office européen des brevets

(11) EP 2 728 864 B1

(12) EUROPEAN PATENT SPECIFICATION

(45) Date of publication and mention
of the grant of the patent:
**27.12.2017 Bulletin 2017/52**

(51) Int Cl.:
*H04N 19/91* (2014.01)          *H04N 19/463* (2014.01)
*H04N 19/50* (2014.01)

(21) Application number: **12803730.6**

(22) Date of filing: **27.06.2012**

(86) International application number:
**PCT/JP2012/004162**

(87) International publication number:
**WO 2013/001808 (03.01.2013 Gazette 2013/01)**

(54) **METHOD FOR CODING VIDEO QUANTIZATION PARAMETER AND METHOD FOR DECODING VIDEO QUANTIZATION PARAMETER**

VERFAHREN ZUR KODIERUNG VON VIDEOQUANTISIERUNGSPARAMETERN UND VERFAHREN ZUR DEKODIERUNG VON VIDEOQUANTISIERUNGSPARAMETERN

PROCÉDÉ POUR CODER UN PARAMÈTRE DE QUANTIFICATION VIDÉO ET PROCÉDÉ POUR DÉCODER UN PARAMÈTRE DE QUANTIFICATION VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2011 JP 2011142453**

(43) Date of publication of application:
**07.05.2014 Bulletin 2014/19**

(73) Proprietor: **NEC Corporation**
**Tokyo 108-8001 (JP)**

(72) Inventors:
• **CHONO, Keiichi**
**Tokyo 108-8001 (JP)**
• **AOKI, Hirofumi**
**Tokyo 108-8001 (JP)**
• **SENDA, Yuzo**
**Tokyo 108-8001 (JP)**

(74) Representative: **Betten & Resch**
**Patent- und Rechtsanwälte PartGmbB**
**Maximiliansplatz 14**
**80333 München (DE)**

(56) References cited:
**EP-A1- 2 536 145      JP-A- 2007 020 141**

• WIEGAND: "Editor's proposed revision of CD relative to JVT-D015d5", 4. JVT MEETING; 61. MPEG MEETING; 22-07-2002 - 26-07-2002; KLAGENFURT,AT; (JOINT VIDEO TEAM OF ISO/IEC JTC1/SC29/WG11 AND ITU-T SG.16 ),, no. JVT-D017d2, 26 July 2002 (2002-07-26), XP030005292, ISSN: 0000-0441
• Thomas Wiegand: "WD3: Working Draft 3 of High-Efficiency Video Coding", Joint Collaborative Team on Video Coding (JCT-VC) of ITU-T SG16 WP3 and ISO/IEC JTC1/SC29/WG11 5th Meeting JCTVC-E603, 16 March 2011 (2011-03-16), XP055114677, Retrieved from the Internet: URL:http://phenix.int-evry.fr/jct/ [retrieved on 2014-04-22]
• CHONO K ET AL: "Efficient binary representation of cu_qp_delta syntax for CABAC", 97. MPEG MEETING; 18-7-2011 - 22-7-2011; TORINO; (MOTION PICTURE EXPERT GROUP OR ISO/IEC JTC1/SC29/WG11),, no. m20458, 14 July 2011 (2011-07-14), XP030049022,
• CHONO K ET AL: "On cu_qp_delta range constraint", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F663, 9 July 2011 (2011-07-09), XP030009686,

- **THOMAS WIEGAND ET AL.: 'WD3: Working Draft 3 of High-Efficiency Video Coding (version 7)' JOINT COLLABORATIVE TEAM ON VIDEO CODING (JCT-VC) OF ITU-T SG16 WP3 AND ISO/IEC JTC1/SC29/WG11 5TH MEETING 15 June 2011, GENEVA, CH, XP055114677**

## Description

### Technical Field

The present invention relates to a technique for coding a video quantization parameter for video coding that uses context-based adaptive binary arithmetic coding, and for example relates to a video quantization parameter coding method, a video quantization parameter decoding method, a video quantization parameter coder, a video quantization parameter decoder, a video quantization parameter coding program, and a video quantization parameter decoding program that are suitably applicable to a video coding device, a video decoding device, and the like.

### Background Art

Non Patent Literatures (NPLs) 1 and 2 each disclose a video encoding technique that uses context-based adaptive binary arithmetic coding (CABAC).

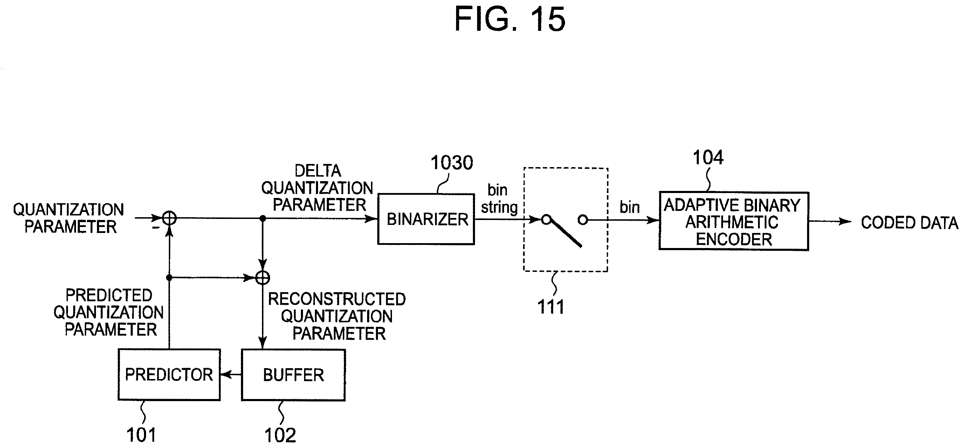

Fig. 15 is a block diagram showing a structure of a video quantization parameter encoding device in the video encoding technique that uses CABAC. The video quantization parameter encoder shown in Fig. 15 (hereafter referred to as the typical video quantization parameter encoder) includes a predictor 101, a buffer 102, a binarizer 1030, an adaptive binary arithmetic encoder 104, and a switch (SW) 111.

A predicted quantization parameter (predicted QP: PQP) supplied from the predictor 101 is subtracted from a quantization parameter (QP) input to the typical video quantization parameter encoder. The QP from which the PQP has been subtracted is referred to as the delta quantization parameter (delta QP: DQP).

In NPL 1, the PQP is a reconstructed quantization parameter (last reconstructed QP: LastRQP) of a last reconstructed image block. In NPL 2, the PQP is a reconstructed quantization parameter (left reconstructed QP: LeftRQP) of a left adjacent image block or a reconstructed quantization parameter (LastRQP) of a last reconstructed image block.

The PQP is added to the DQP and the sum is stored in the buffer 102 as a reconstructed quantization parameter (reconstructed QP: RQP), for subsequent quantization parameter encoding.

The binarizer 1030 binarizes the DQP to obtain a bin string. One bit of the bin string is referred to as a bin. In the bin string, a bin that is binary arithmetic coded first is referred to as the first bin (1st bin), a bin that is binary arithmetic coded second is referred to as the second bin (2nd bin), and a bin that is binary arithmetic coded nth is referred to as the nth bin (nth bin). The bin and the bin string are defined in 3.9 and 3.12 in NPL 1.

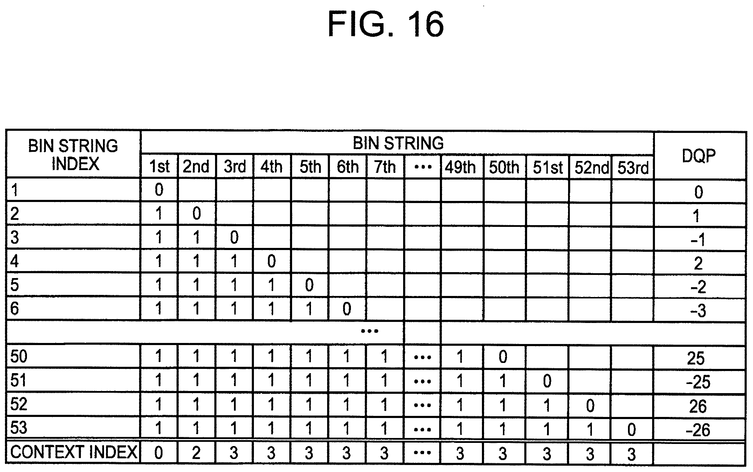

Fig. 16 is an explanatory diagram showing a correspondence table between the DQP (rightmost column) and the bin string (center column) in NPLs 1 and 2.

A bin string index in the leftmost column in Fig. 16 indicates an index of a bin string corresponding to a DQP value. The bin string index is 1 in the case where the DQP is 0, 2 * DQP - 1 in the case where the DQP is greater than 0, and -2 * DQP + 1 in the case where the DQP is less than 0 (where "*" denotes multiplication).

A context index in the lowermost row in Fig. 16 indicates an index of a context used for binary arithmetic encoding of a bin in a corresponding column. For example, the bin string corresponding to DQP = -1 is 110, in which the value of the first bin is 1, the value of the second bin is 1, and the value of the third bin is 0. The context index used for binary arithmetic encoding of the first bin is 0, the context index used for binary arithmetic encoding of the second bin is 2, and the context index used for binary arithmetic encoding of the third bin is 3. The context mentioned here is a combination of a most probable symbol (PS) of the bin and its probability.

The adaptive binary arithmetic encoder 104 binary arithmetic codes each bin of the bin string supplied via the switch 111 beginning with the first bin, using the context associated with the corresponding context index. The adaptive binary arithmetic encoder 104 also updates the context associated with the context index according to the value of the binary arithmetic coded bin, for subsequent binary arithmetic encoding. Detailed operations of adaptive binary arithmetic encoding are described in 9.3.4 in NPL 1.

The typical quantization parameter encoder codes the input video quantization parameter based on the above-mentioned operations.

### Citation List

### Non Patent Literature(s)

NPL 1: ISO/IEC 14496-10 Advanced Video Coding

NPL 2: "WD3: Working Draft 3 of High-Efficiency Video Coding", Document: JCTVC-E603, Joint Collaborative Team on Video Coding (JCT-VC) of ITU-T SG16 WP3 and ISO/IEC JTC 1/SC29/WG11 5th Meeting: Geneva, CH, 16-23 March, 2011

EP 2 536 145 A relates to binarization of DQP using separate absolute value and sign in CABAC.

## Summary of Invention

### Technical Problem

As can be seen from Fig. 16, the typical quantization parameter encoder performs binarization without distinguishing between information about whether the significant DQP is positive or negative and information about the absolute value of the significant DQP. The typical quantization parameter encoder therefore has a problem of being unable to suitably code the significant DQP due to the following three factors.

The first factor is that, since the second bin (bin in the column "2nd") and the subsequent bins (bins in the columns from "3rd" onward) include information about three or more states which cannot be expressed by one bin, it is impossible to binary arithmetic code the bins using appropriate contexts. Information that can be expressed by one bin is information of which one of two states holds true. However, the second bin and the subsequent bins include information about three or more states which cannot be expressed by one bin. In detail, in Fig. 16, the second bin includes the information of whether the DQP is positive or negative and the information indicating whether or not the absolute value of the significant DQP is greater than or equal to 1. The subsequent bins from the third bin (in the columns from "3rd" onward) include the information of whether the DQP is positive or negative and the information indicating the magnitude of the absolute value of the significant DQP. Hence, it is impossible to binary arithmetic code, with appropriate contexts, the second bin and the subsequent bins including information about three or more states which cannot be expressed by one bin.

The second factor is that redundant bins cannot be efficiently reduced in the case where the DQP range is asymmetric between positive and negative. When the DQP range is asymmetric between positive and negative, a specific DQP needs to be coded without reducing redundant bins, due to the presence of a bin string of a DQP that is not transmitted. For example, the DQP range defined in NPLs 1 and 2 is from -26 to 25, which is asymmetric between positive and negative. In Fig. 16, DQP = -26 needs to be coded without reducing the redundant 52nd and 53rd bins, due to the presence of the bin string of DQP = 26 that is not transmitted.

The third factor is that the number of bins included in the bin string handled by the typical quantization parameter encoder is approximately twice the number of bins in the case of separately binarizing the information of whether the significant DQP is positive or negative and the absolute value of the significant DQP. A large number of bins lead to an increase in the amount of coded data and a decrease in the speed of the DQP encoding process and decoding process.

The present invention has an object of enabling suitable encoding of a video quantization parameter for video encoding that uses context-based adaptive binary arithmetic encoding, by resolving each of the above-mentioned factors.

### Solution to Problem

The above object is achieved with the features of the claims.

### Advantageous Effects of Invention

According to the present invention, it is possible to suitably code a video quantization parameter for video encoding that uses context-based adaptive binary arithmetic encoding.

### Brief Description of Drawings

[Fig. 1] Fig. 1 is a block diagram showing a structure of a video quantization parameter encoder in Exemplary Embodiment 1.

[Fig. 2] Fig. 2 is a flowchart showing operations of the video quantization parameter encoder in Exemplary Embodiment 1.

[Fig. 3] Fig. 3 is an explanatory diagram showing an example of a correspondence table between a DQP and a bin string.

[Fig. 4] Fig. 4 is a block diagram showing a structure of a video quantization parameter decoder in Exemplary Embodiment 2.

[Fig. 5] Fig. 5 is a flowchart showing operations of the video quantization parameter decoder in Exemplary Embodiment 2.

[Fig. 6] Fig. 6 is a block diagram showing a structure of a video quantization parameter encoder in Exemplary Embodiment 3.

[Fig. 7] Fig. 7 is a block diagram showing a structure of a video quantization parameter decoder in Exemplary Embodiment 3.

[Fig. 8] Fig. 8 is a flowchart showing operations of the video quantization parameter decoder in Exemplary Embodiment 3.

Fig. 9 is a block diagram showing a structure of a video quantization parameter encoder in Exemplary Embodiment 4.

Fig. 10 is a block diagram showing a structure of a video quantization parameter decoder in Exemplary Embodiment 4.

Fig. 11 is an explanatory diagram showing another example of the correspondence table between the DQP and the bin string.

Fig. 12 is a block diagram showing an example of a structure of an information processing system capable of realizing functions of a video quantization parameter encoder and a video quantization parameter decoder according to the present invention.

Fig. 13 is a block diagram showing characteristic components in a video quantization parameter encoder according to the present invention.

Fig. 14 is a block diagram showing characteristic components in a video quantization parameter decoder according to the present invention.

Fig. 15 is a block diagram showing a structure of a typical video quantization parameter encoder.

Fig. 16 is an explanatory diagram showing a typical example of the correspondence table between the DQP and the bin string.

**Description of Embodiments**

The following describes exemplary embodiments of the present invention with reference to drawings.

**Exemplary Embodiment 1**

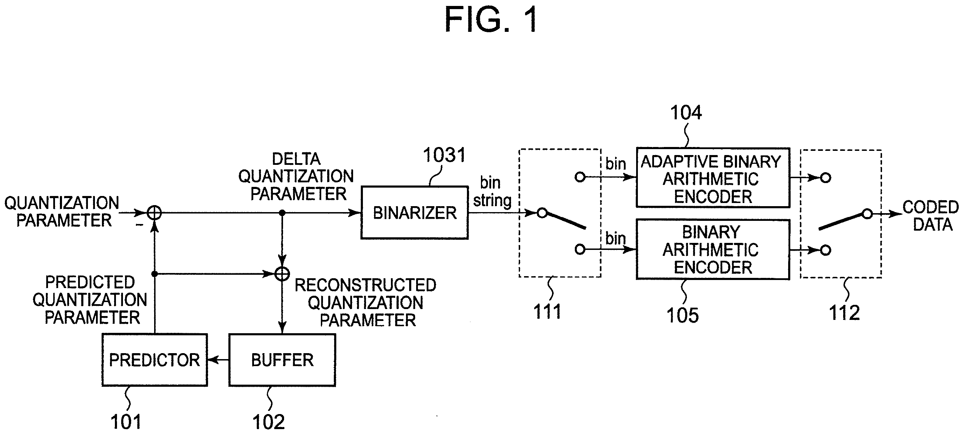

Fig. 1 is a block diagram showing a structure of a video quantization parameter encoder in Exemplary Embodiment 1 of the present invention. The video quantization parameter encoder shown in Fig. 1 includes a predictor 101, a buffer 102, a binarizer 1031, an adaptive binary arithmetic encoder 104, a binary arithmetic encoder 105, a switch (SW) 111, and a switch (SW) 112.

A predicted quantization parameter PQP supplied from the predictor 101 is subtracted from a quantization parameter QP input to the video quantization parameter encoder.

The PQP is added to a delta quantization parameter DQP (DQP = QP - PQP) and the sum is stored in the buffer 102 as a reconstructed quantization parameter RQP (RQP = DQP + PQP), for subsequent quantization parameter encoding.

The binarizer 1031 which is a feature of the present invention binarizes the input DQP in a manner that information indicating whether or not the DQP is significant is associated with the first bin (bin (1)), information indicating whether the significant DQP is positive or negative is associated with the second bin (bin(2)), and information indicating the absolute value of the DQP is associated with the third and subsequent bins (bin (n) : n = 3, 4, ...). This is formulated as follows.

$$\text{bin}(1) \ = \ \text{func1}(DQP)$$
(1)

$$\text{bin}(2) \ = \ \text{func2}(DQP)$$
(2)

$$\text{bin}(n) \ = \ \text{func3}(n \ - \ 2, \ |DQP|)$$
(3).

Here, func1(a) is a function that returns 0 if a is 0 and returns 1 if a is not 0, func2(a) is a function that returns 0 if a is positive and returns 1 if a is not positive, and func3(a, b) is a function that returns 1 if a is less than b and returns 0 otherwise. Note that bin(n) (n = 2, 3, ...) is coded only in the case where the DQP has a significant value (i.e. in the case where funcl(DQP) is 1).

The adaptive binary arithmetic encoder 104 binary arithmetic codes each bin (bin(n): n = 1, 3, 4, ...), other than the second bin, of the bin string supplied via the switch 111 using a context associated with the context index corresponding to the bin, and outputs the coded data via the switch 112. The adaptive binary arithmetic encoder 104 also updates the context associated with the context index according to the value of the binary arithmetic coded bin, for subsequent binary arithmetic encoding.

The binary arithmetic encoder 105 binary arithmetic codes, with equal probability, the second bin of the bin string supplied via the switch 111, and outputs the coded data via the switch 112.

This completes the description of the structure of the video quantization parameter encoder in this exemplary embodiment.

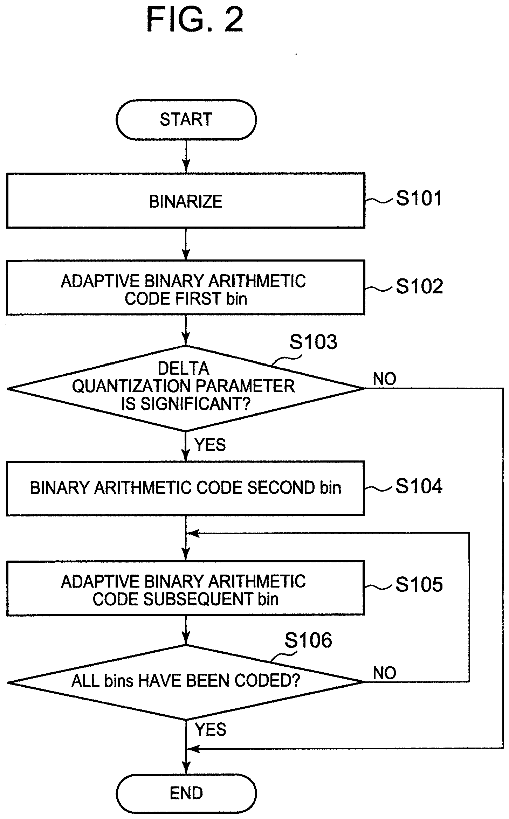

The following describes operations of the binarizer 1031, the adaptive binary arithmetic encoder 104, and the binary arithmetic encoder 105 which are features of the video quantization parameter encoder in this exemplary embodiment, using a flowchart in Fig. 2.

The adaptive binary arithmetic encoder 104 starts the process, with an initial value parameter n being set to 3.

In step S101, the binarizer 1031 binarizes the DQP in a manner that the information indicating whether or not the DQP is significant is associated with the first bin, the information indicating whether or not the significant DQP is positive is associated with the second bin, and the information indicating the absolute value of the DQP is associated with the third and subsequent bins.

In step S102, the adaptive binary arithmetic encoder 104 adaptive binary arithmetic codes bin(1).

In step S103, the binary arithmetic encoder 105 determines whether or not the DQP is significant. In the case where the DQP is significant, the binary arithmetic encoder 105 proceeds to step S104. Otherwise, the binary arithmetic encoder 105 ends the process. In step S104, the binary arithmetic encoder 105 binary arithmetic codes bin(2). In step S105, the adaptive binary arithmetic encoder 104 adaptive binary arithmetic codes bin(n).

In step S106, the adaptive binary arithmetic encoder 104 determines whether or not all bins of the bin string have been coded. In the case where all bins have been coded, the adaptive binary arithmetic encoder 104 ends the process. Otherwise, the adaptive binary arithmetic encoder 104 increments n and proceeds to step S105, to adaptive binary arithmetic code the subsequent bin(n).

This completes the description of the operations of the binarizer 1031, the adaptive binary arithmetic encoder 104, and the binary arithmetic encoder 105 which are features of the video quantization parameter encoder in this exemplary embodiment.

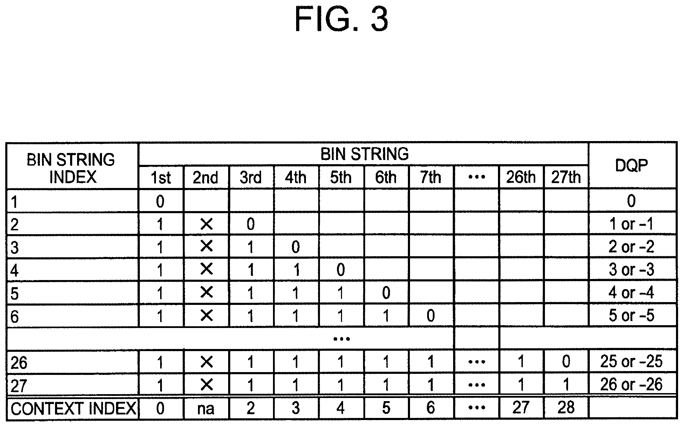

Fig. 3 is an explanatory diagram showing an example of a correspondence table between the DQP (rightmost column) and the bin string (center column) according to the present invention.

In Fig. 3, X in the second column of the bin string denotes 1-bit information indicating whether or not the DQP is positive, i.e. whether the DQP is positive or negative. Suppose X = 0 denotes positive and X = 1 denotes negative. For example, the bin string of DQP = 1 is 100, and the bin string of DQP = -1 is 110. Meanwhile, na in the context index row denotes that no context is used (i.e. the most probable symbol and its probability are fixed).

The binarization process according to the present invention resolves the three factors causing the problem mentioned above, as follows.

The first factor is resolved by binary arithmetic encoding the second bin and the subsequent bins using appropriate contexts. In Fig. 3, the second bin indicates only the information of whether the DQP is positive or negative, that is, information of which one of two states holds true. Likewise, the third bin indicates only the information of whether or not the absolute value of the DQP is greater than 1, that is, information of which one of two states holds true. Thus, the second bin and the third bin are binary arithmetic coded using appropriate contexts. The fourth and subsequent bins can be equally designed to indicate only the information of whether or not the absolute value of the DQP is greater than a given value, that is, information of which one of two states holds true, by adding context indexes according to columns.

The second factor is resolved because, given that the decoder is able to identify whether the DQP is positive or negative from the value of the second bin, the encoder can efficiently reduce redundant bins even when the DQP range is asymmetric between positive and negative. In detail, in Fig. 3, in the case of encoding DQP = -26, the redundant 28th bin does not need to be coded because the decoder is able to identify DQP = -26 when the 27th bin is 1 on the ground that the minimum value of the DQP is -26. Moreover, in the case of encoding DQP = 25, the redundant 27th bin does not need to be coded because the decoder is able to identify DQP = 25 when the 26th bin is 1 on the ground that the maximum value of the DQP is 25.

The third factor is resolved because the number of bins included in the bin string in this exemplary embodiment is the same as the number of bins in the case of separately binarizing the information of whether the significant DQP is positive or negative and the absolute value of the significant DQP, as is clear from the comparison between the correspondence table shown in Fig. 16 and the correspondence table shown in Fig. 3.

**Exemplary Embodiment 2**

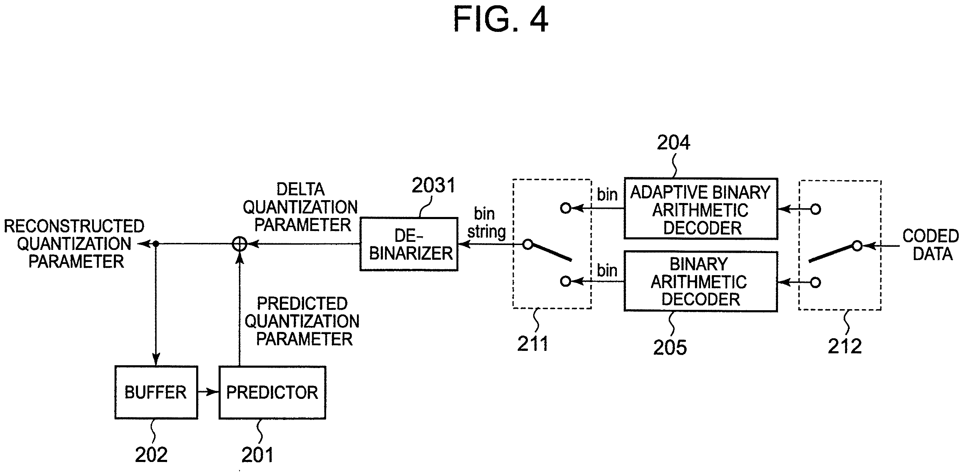

Fig. 4 is a block diagram showing a structure of a video quantization parameter decoder corresponding to the video quantization parameter encoder in Exemplary Embodiment 1. The video quantization parameter decoder shown in Fig. 4 includes a predictor 201, a buffer 202, a de-binarizer 2031, an adaptive binary arithmetic decoder 204, a binary arithmetic decoder 205, a switch (SW) 211, and a switch (SW) 212.

The adaptive binary arithmetic decoder 204 binary arithmetic decodes bin(1) from the coded data supplied via the switch 212, and supplies the decoded data to the de-binarizer 2031 via the switch 211. The adaptive binary arithmetic decoder 204 also updates the context associated with the context index corresponding to the first bin according to the value of the binary arithmetic decoded bin, for subsequent binary arithmetic decoding.

In the case where bin(1) is 1, the binary arithmetic decoder 205 binary arithmetic decodes bin(2) from the coded data supplied via the switch 212, and supplies the decoded data to the de-binarizer 2031 via the switch 211.

In the case where bin(1) is 1, the adaptive binary arithmetic decoder 204 further binary arithmetic decodes bin(n) (n = 3, 4, ...) from the coded data supplied via the switch 212 until a bin whose value is 0 is decoded, and supplies the decoded data to the de-binarizer 2031 via the switch SW 211. The adaptive binary arithmetic decoder 204 updates the context associated with the context index corresponding to the nth bin according to the value of the binary arithmetic decoded bin, for subsequent binary arithmetic decoding.

The de-binarizer 2031 outputs the DQP whose value is 0, in the case where the bin string is 0 (n = 1). Otherwise (n $\geq$ 3), the de-binarizer 2031 outputs the DQP whose value is obtained by the following equation.

$$DQP = (1 - 2 * bin(2)) * (n - 2)$$
$$\cdots (4).$$

Here, "*" in equation (4) denotes multiplication.

The PQP supplied from the predictor 201 is added to the DQP supplied from the de-binarizer 2031, to obtain the RQP.

The RQP is also stored in the buffer 202 for subsequent quantization parameter decoding.

This completes the description of the structure of the video quantization parameter decoder in this exemplary embodiment.

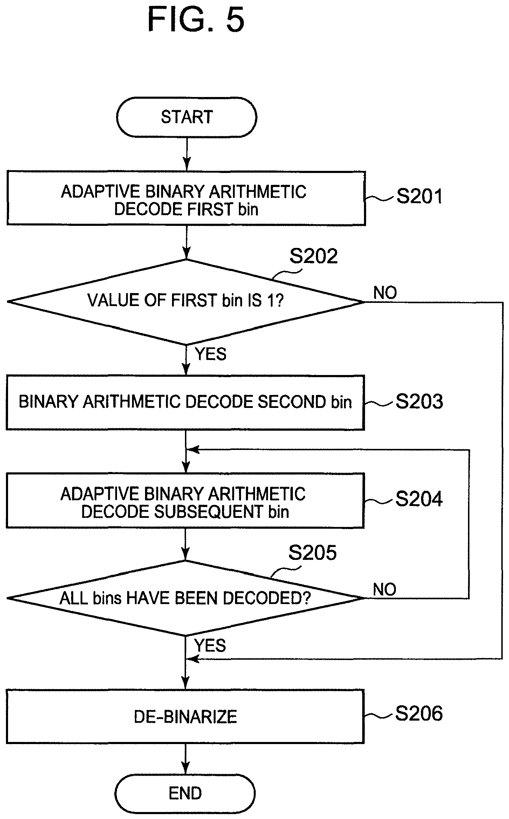

The following describes operations of the de-binarizer 2031, the adaptive binary arithmetic decoder 204, and the binary arithmetic decoder 205 which are features of the video quantization parameter decoder in this exemplary embodiment, using a flowchart in Fig. 5.

The adaptive binary arithmetic decoder 204 starts the process, with an initial value parameter n being set to 3.

In step S201, the adaptive binary arithmetic decoder 204 adaptive binary arithmetic decodes bin(1).

In step S202, the binary arithmetic decoder 205 determines whether or not the value of bin(1) is 1. In this example, "1" indicates that the DQP is significant. In the case where the value of bin(1) is 1, the binary arithmetic decoder 205 proceeds to step S203. Otherwise, the binary arithmetic decoder 205 proceeds to step S206.

In step S203, the binary arithmetic decoder 205 binary arithmetic decodes bin(2). In step S204, the adaptive binary arithmetic decoder 204 adaptive binary arithmetic decodes bin(n).

In step S205, the adaptive binary arithmetic decoder 204 determines whether or not all bins have been decoded, i.e. whether or not the value of bin(n) is 0. In the case where all bins have been decoded, the adaptive binary arithmetic decoder 204 proceeds to step S206. Otherwise, the adaptive binary arithmetic decoder 204 increments n and proceeds to step S204, to adaptive binary arithmetic decode the subsequent bin(n).

In step S206, the de-binarizer 2031 de-binarizes the decoded bin string to determine the DQP.

This completes the description of the operations of the de-binarizer 2031, the adaptive binary arithmetic decoder 204, and the binary arithmetic decoder 205 which are features of the video quantization parameter decoder in this exemplary embodiment.

**Exemplary Embodiment 3**

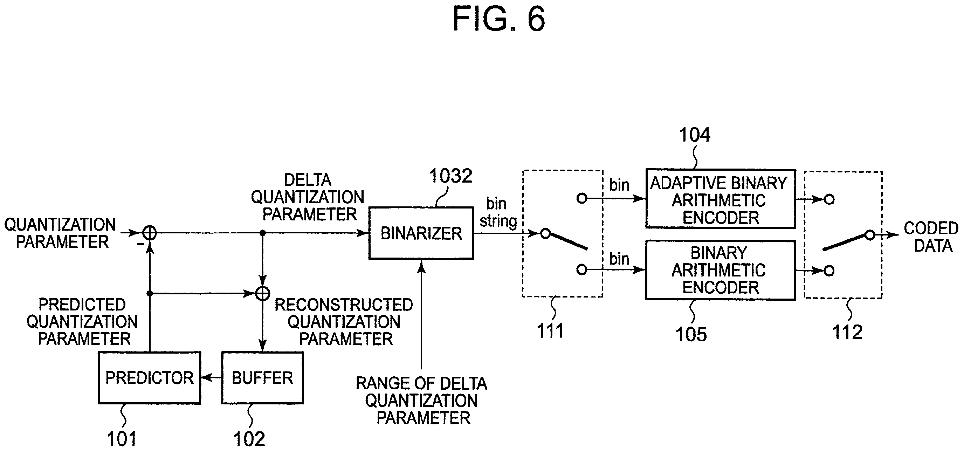

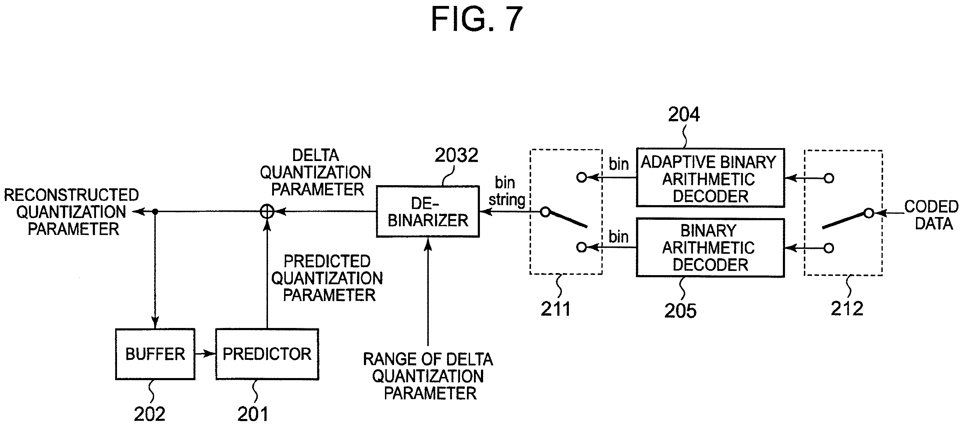

Exemplary Embodiments 1 and 2 describe the video quantization parameter encoder and the video quantization parameter decoder that have no constraint on the DQP range. In the case where there is a constraint on the DQP range, it is possible to reduce redundant bins of the DQP using the DQP range. Figs. 6 and 7 are block diagrams showing structures of a video quantization parameter encoder and a video quantization parameter decoder as an improvement on Exemplary Embodiments 1 and 2 to use the DQP range (combination of minimum DQP and maximum DQP).

A binarizer 1032 in Fig. 6 uses the combination of the minimum DQP (minDQP $\leq$ 0) and the maximum DQP (maxDQP $\geq$ 0). The binarizer 1032 computes the first bin, the second bin, and a maximum number cMax of the third and subsequent bins of the DQP by the following equations.

$$\text{bin(1)} = \text{func1(DQP)} \quad (5)$$

$$\text{bin(2)} = \text{func2(DQP)} \quad (6)$$

$$\text{cMax} = \max(0, \text{func4(minDQP, maxDQP, DQP)} - 1) \quad \cdots \quad (7).$$

Here, func4(a, b, c) is a function that returns -a if c is negative and returns b if c is positive. Note that bin(n) (n = 2, 3, ...) is coded only in the case where the DQP has a significant value (i.e. in the case where fund (DQP) is 1) .

When cMax $\geq$ 1, the binarizer 1032 computes bin(n) (n = 3, ..., 2 + cMax) by the following equation.

$$\text{bin(n)} = \text{func5(n} - 2, \text{cMax, |DQP|)} \quad (8).$$

Here, func5(a, b, c) is a function that returns 1 if b and c are equal, returns 1 if c is less than b and also a is less than c, and returns 0 otherwise (if c is less than b and also a and c are equal). The third and subsequent bins (with syntax element value |DQP|) obtained by equation (8) are the same as the bins of the bin string obtained by the truncated unary (TU) binarization process described in 9.3.2.2 in NPL 1.

In the video quantization parameter decoder shown in Fig. 7 corresponding to the video quantization parameter encoder shown in Fig. 6, a de-binarizer 2032 computes cMax based on minDQP, maxDQP, and binary arithmetic decoded bin(2), by the following equation.

$$\text{cMax} = \max(0, \text{func6(minDQP, maxDQP, bin(2))} - 1) \quad \cdots \quad (9).$$

Here, func6(a, b, c) is a function that returns -a if c is 1 (i.e. if the value of the decoded DQP is negative according to the definition of func2(a)), and returns b if c is 0 (i.e. if the value of the decoded DQP is positive according to the definition of func2(a)).

The de-binarizer 2032 further determines the DQP. In detail, in the case where cMax $\geq$ 1 and the value of the last decoded bin is 1, the de-binarizer 2032 uses the following equation (10).

$$\text{DQP} = (1 - 2 * \text{bin(2)}) * (n - 1) \quad \cdots \quad (10).$$

In the case where cMax = 0 and bin(1) = 1, the de-binarizer 2032 uses the following equation (11).

$$\text{DQP} = (1 - 2 * \text{bin(2)}) \quad (11).$$

Otherwise, the de-binarizer 2032 uses equation (4).

As is clear from equations (10) and (11), the de-binarizer 2032 determines the DQP by estimating the value of any redundant bin reduced in the video encoding process, based on the maximum number cMax of the third and subsequent bins determined by the DQP range and bin(2) (the positive or negative sign of the DQP).

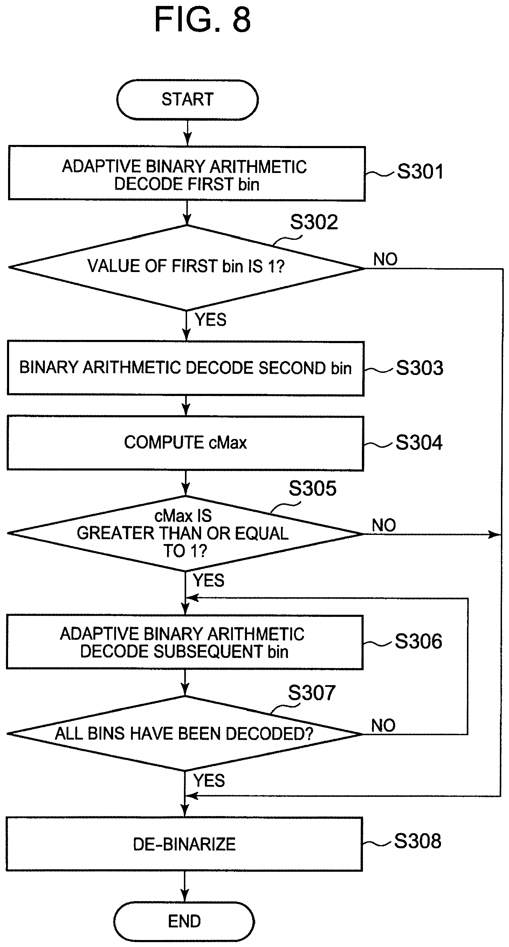

The following describes operations of the de-binarizer 2032, the adaptive binary arithmetic decoder 204, and the binary arithmetic decoder 205 in the video quantization parameter decoder in Fig. 7, using a flowchart in Fig. 8.

The adaptive binary arithmetic decoder 204 starts the process, with an initial value parameter n being set to 3.

In step S301, the adaptive binary arithmetic decoder 204 adaptive binary arithmetic decodes bin(1).

In step S302, the binary arithmetic decoder 205 determines whether or not the value of bin(1) is 1. In the case where the value of bin(1) is 1, the binary arithmetic decoder 205 proceeds to step S303. Otherwise, the binary arithmetic decoder 205 proceeds to step S308.

In step S303, the binary arithmetic decoder 205 binary arithmetic decodes bin(2).

In step S304, the de-binarizer 2032 computes cMax. In step S305, the de-binarizer 2032 determines whether or not cMax is greater than or equal to 1. In the case where cMax is greater than or equal to 1, the de-binarizer 2032 proceeds to step S306. Otherwise, the de-binarizer 2032 proceeds to step S308.

In step S306, the adaptive binary arithmetic decoder 204 adaptive binary arithmetic decodes bin(n).

In step S307, the adaptive binary arithmetic decoder 204 determines whether or not all bins have been decoded. All bins have been decoded if a condition that the value of bin(n) is 0, a condition that the value of n - 2 is equal to cMax, or both of these conditions are met. In the case where all bins have been decoded, the adaptive binary arithmetic decoder 204 proceeds to step S308. Otherwise, the adaptive binary arithmetic decoder 204 increments n and proceeds to step S306, to adaptive binary arithmetic decode the subsequent bin(n).

In step S308, the de-binarizer 2032 de-binarizes the decoded bin string to determine the DQP.

This completes the description of the operations of the de-binarizer 2032, the adaptive binary arithmetic decoder 204, and the binary arithmetic decoder 205 in the video quantization parameter decoder shown in Fig. 7.

Fig. 3 also shows an example of reducing redundant bins of the DQP in the video quantization parameter encoder shown in Fig. 6 where minDQP = -26 and maxDQP = 25. Regarding the bin string of DQP = -26, it is clear that the redundant 28th bin is not coded because the decoder is able to identify DQP = -26 when the 27th bin is 1. That is, the video quantization parameter encoder in this exemplary embodiment described above can reduce, through the use of the DQP range and the coded second bin (the positive or negative sign of the DQP), any redundant bin among the bins of the DQP that are coded after the positive or negative sign of the DQP, even in the case where the range of the absolute value of the DQP is different between positive and negative. Likewise, the video quantization parameter decoder in this exemplary embodiment described above can determine the DQP by estimating, through the use of the DQP range and the coded positive or negative sign of the DQP, the value of any redundant bin reduced in the video quantization parameter encoding process among the bins of the DQP that are decoded after the positive or negative sign of the DQP, even in the case where the range of the absolute value of the DQP is different between positive and negative.

In the above-mentioned video quantization parameter encoder shown in Fig. 6 and video quantization parameter decoder shown in Fig. 7, minDQP and maxDQP may be generated from the range of the quantization parameter (combination of minimum QP and maximum QP) and the predicted quantization parameter PQP.

**Exemplary Embodiment 4**

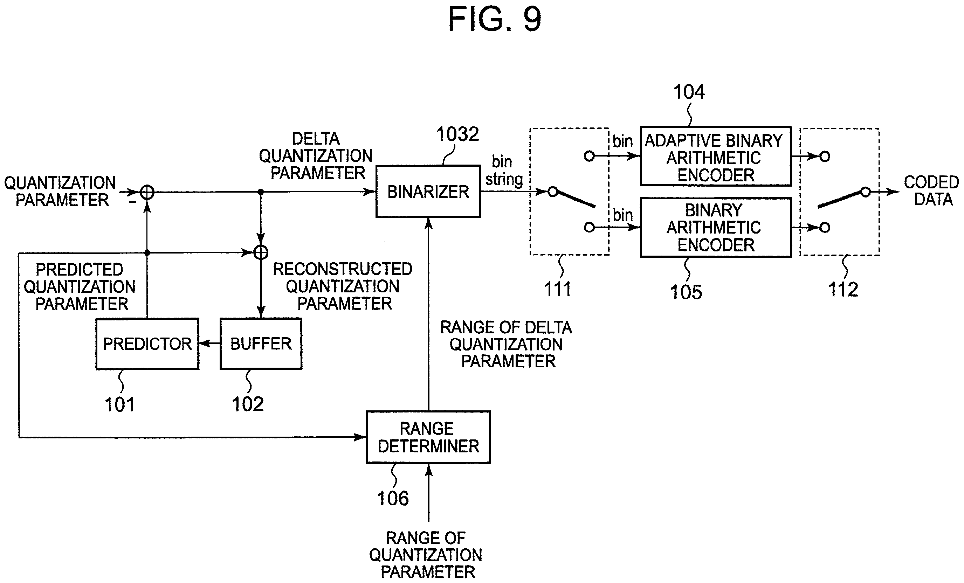

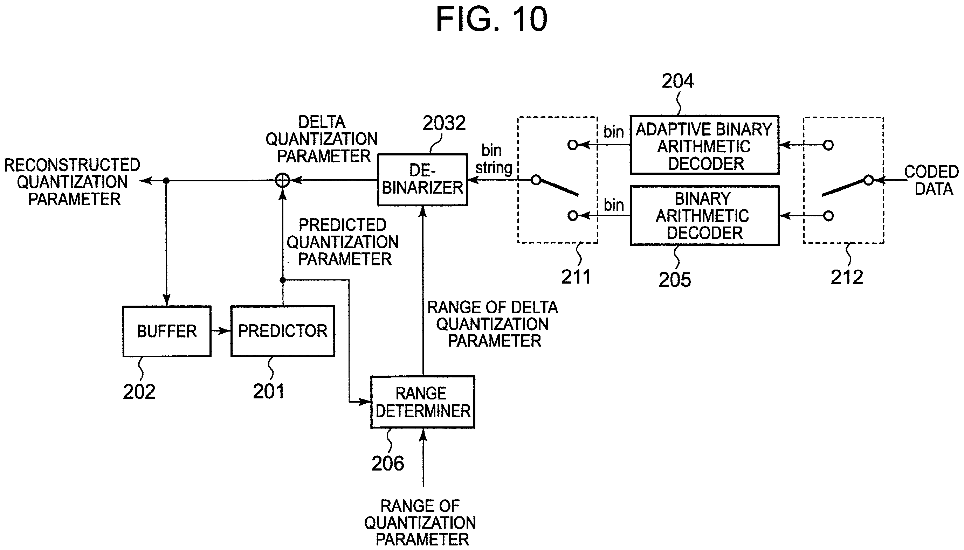

Figs. 9 and 10 are block diagrams showing structures of a video quantization parameter encoder and a video quantization parameter decoder as an improvement to generate minDQP and maxDQP based on the combination of the minimum QP (minQP) and the maximum QP (maxQP) and the PQP.

The video quantization parameter encoder shown in Fig. 9 further includes a range determiner 106, and the video quantization parameter decoder shown in Fig. 10 further includes a range determiner 206, as is clear from the comparison with Figs. 6 and 7. The range determiners 106 and 206 each compute minDQP and maxDQP by the following equations.

$$\mathrm{minDQP = minQP - PQP} \qquad\qquad \cdots (12)$$

$$\mathrm{maxDQP = maxQP - PQP} \qquad\qquad \cdots (13).$$

The inclusion of the range determiners 106 and 206 enables more effective reduction of redundant bins when the QP to be coded is closer in value to minQP or maxQP.

In a video quantization parameter encoder and a video quantization parameter decoder where minDQP = -26 and maxDQP = 25, equations (12) and (13) may be replaced with the following equations (12)' and (13)'.

$$\mathrm{minDQP = max(-26, minQP - PQP)}$$

$$(12)'$$

$$maxDQP = min(25, maxQP - PQP)$$

$$(13)'.$$

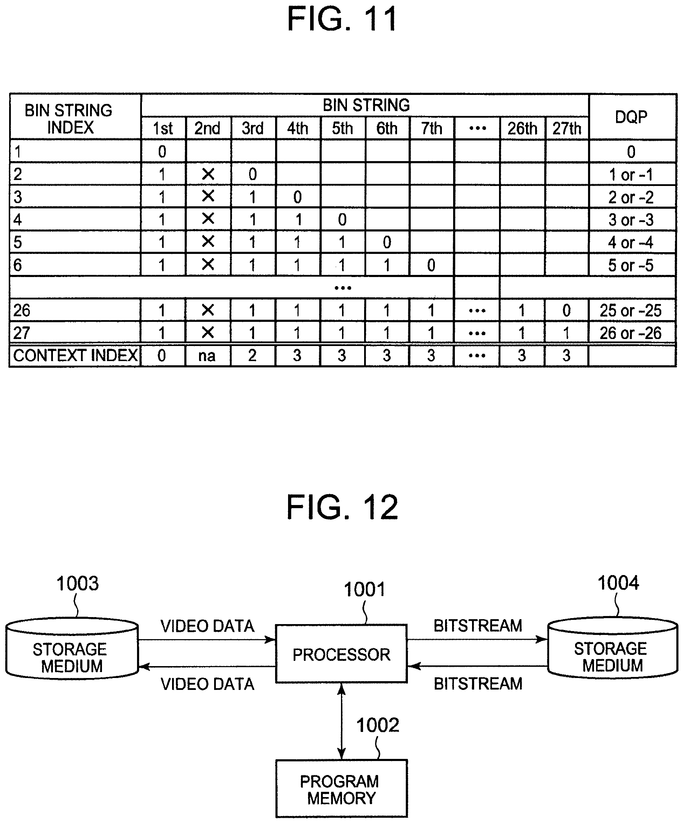

The above-mentioned video quantization parameter encoder and video quantization parameter decoder according to the present invention may operate based on a correspondence table in which the value of the context index is fixed for bins from a predetermined column onward as shown in Fig. 11, instead of using the example shown in Fig. 3.

In the correspondence table shown in Fig. 11, the value of the context index is fixed to 3 for the bins in the fourth and subsequent columns. In Fig. 11, the first bin indicates only the information of whether or not the DQP is significant, that is, information of which one of two states holds true. The second bin indicates only the information of whether the DQP is positive or negative, that is, information of which one of two states holds true. The third bin indicates only the information of whether or not the absolute value of the DQP is greater than 1, that is, information of which one of two states holds true. The fourth and subsequent bins indicate only the information of whether or not the bin string terminates, that is, information of which one of two states holds true.

Thus, the video quantization parameter encoder according to the present invention may binary arithmetic code the first bin indicating whether or not the DQP is significant, the second bin indicating whether the DQP is positive or negative, the third bin indicating whether or not the absolute value of the DQP is greater than 1, and the bin indicating whether or not the bin string terminates.

As described above, according to the present invention, a video quantization parameter for video encoding that uses context-based adaptive binary arithmetic encoding can be suitably coded by providing means for performing binarization in a manner that the information indicating whether or not the delta quantization parameter is significant is associated with the first bin, the information indicating whether the significant delta quantization parameter is positive or negative is associated with the second bin, and the information indicating the absolute value of the significant delta quantization parameter is associated with the third and subsequent bins.

According to the present invention, the above-mentioned suitable encoding is achieved by three features: assigning an appropriate context to each bin of the delta quantization parameter; reducing redundant bins of the delta quantization parameter; and reducing the number of bins included in the bin string of the delta quantization parameter.

Each of the exemplary embodiments described above may be realized not only by hardware but also by a computer program.

An information processing system shown in Fig. 12 includes a processor 1001, a program memory 1002, a storage medium 1003 for storing video data, and a storage medium 1004 for storing a bitstream. The storage medium 1003 and the storage medium 1004 may be separate storage media, or storage areas included in the same storage medium. As a storage medium, a magnetic storage medium such as a hard disk is available.

In the information processing system shown in Fig. 12, a program for realizing the functions of the blocks (except the block of the buffer) shown in each of Figs. 1, 4, 6, 7, 9, and 10 is stored in the program memory 1002. The processor 1001 realizes the functions of the video quantization parameter encoder or the video quantization parameter decoder shown in each of Figs. 1, 4, 6, 7, 9, and 10, by executing processes according to the program stored in the program memory 1002.

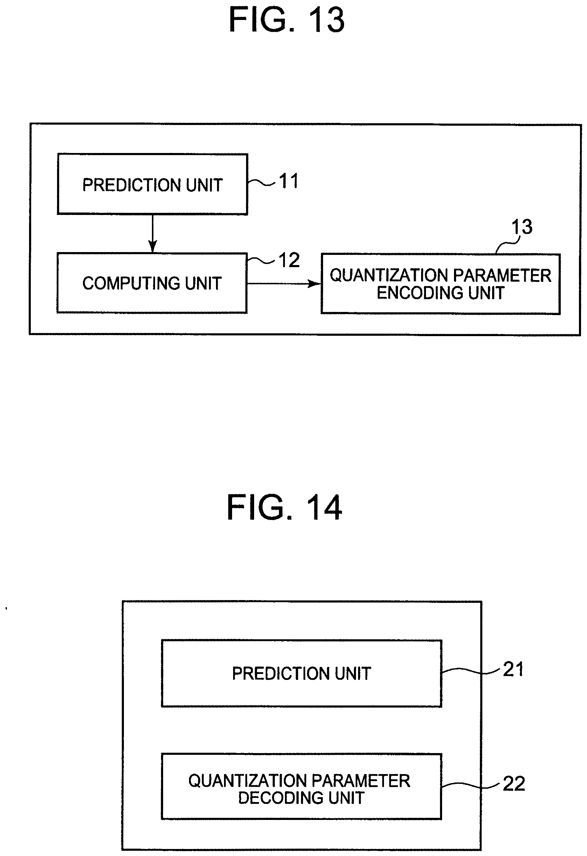

Fig. 13 is a block diagram showing characteristic components in a video quantization parameter encoder according to the present invention. As shown in Fig. 13, the video quantization parameter encoder according to the present invention includes: a prediction unit 11 for generating a predicted quantization parameter from a past reconstructed quantization parameter; a computing unit 12 for generating a delta quantization parameter from a quantization parameter and the predicted quantization parameter; and quantization parameter encoding unit 13 for binary arithmetic encoding a first bin indicating whether or not the delta quantization parameter is significant, a second bin indicating whether the delta quantization parameter is positive or negative, and other bins indicating an absolute value of the delta quantization parameter, in the case where the delta quantization parameter is significant.

Fig. 14 is a block diagram showing characteristic components in a video quantization parameter decoder according to the present invention. As shown in Fig. 14, the video quantization parameter decoder according to the present invention includes: a prediction unit 21 for generating a predicted quantization parameter from a past reconstructed quantization parameter; and quantization parameter decoding unit 22 for binary arithmetic decoding a first bin indicating whether or not a delta quantization parameter is significant, a second bin indicating whether the delta quantization parameter is positive or negative, and other bins indicating an absolute value of the delta quantization parameter.

Though the present invention has been described with reference to the above exemplary embodiments and examples, the present invention is not limited to the above exemplary embodiments and examples. Various changes understandable by those skilled in the art can be made to the structures and details of the present invention.

**Reference Signs List**

11 prediction unit
12 computing unit
13 quantization parameter encoding unit
21 prediction unit
22 quantization parameter decoding unit
101 predictor
102 buffer
1031, 1032 binarizer
104 adaptive binary arithmetic encoder
105 binary arithmetic encoder
106 range determiner
111 switch
112 switch
201 predictor
202 buffer
2031, 2032 de-binarizer
204 adaptive binary arithmetic decoder
205 binary arithmetic decoder
206 range determiner
211 switch
212 switch

**Claims**

1.  A video quantization parameter encoding method for encoding a quantization parameter for a video encoding process, the video quantization parameter encoding method being based on context-based adaptive binary arithmetic encoding and comprising:

    generating a predicted quantization parameter from a past reconstructed quantization parameter;
    generating a delta quantization parameter from a quantization parameter and the predicted quantization parameter; and
    binary arithmetic encoding a first bin indicating whether or not the delta quantization parameter is significant, and, in the case where the delta quantization parameter is significant, binary arithmetic encoding a sign bin indicating whether the delta quantization parameter is positive or negative, and other bins indicating an absolute value of the delta quantization parameter,
    **characterized in that** the binary arithmetic encoding is performed using no context for the sign bin and using a context for each of the first bin and the other bins.

2.  A video quantization parameter decoding method for decoding a quantization parameter for a video decoding process, the video quantization parameter decoding method being based on context-based adaptive binary arithmetic encoding and comprising:

    generating a predicted quantization parameter from a past reconstructed quantization parameter; and
    binary arithmetic decoding a first bin indicating whether or not a delta quantization parameter is significant, a sign bin indicating whether the delta quantization parameter is positive or negative, and other bins indicating an absolute value of the delta quantization parameter,
    **characterized in that** the binary arithmetic decoding is performed using no context for the sign bin and using a context for each of the first bin and the other bins.

3.  A video quantization parameter encoder for encoding a quantization parameter for a video encoding process, the video quantization parameter encoder being based on context-based adaptive binary arithmetic encoding and comprising:

prediction means (11) for generating a predicted quantization parameter from a past reconstructed quantization parameter;

computing means (12) for generating a delta quantization parameter from a quantization parameter and the predicted quantization parameter; and

quantization parameter encoding means (13) for binary arithmetic encoding a first bin indicating whether or not the delta quantization parameter is significant, and, in the case where the delta quantization parameter is significant, binary arithmetic encoding a sign bin indicating whether the delta quantization parameter is positive or negative, and other bins indicating an absolute value of the delta quantization parameter,

**characterized in that** the quantization parameter encoding means (13) performs the binary arithmetic encoding using no context for the sign bin and using a context for each of the first bin and the other bins.

4. A video quantization parameter decoder for decoding a quantization parameter for a video decoding process, the video quantization parameter decoder being based on context-based adaptive binary arithmetic encoding and comprising:

prediction means (21) for generating a predicted quantization parameter from a past reconstructed quantization parameter; and

quantization parameter decoding means (22) for binary arithmetic decoding a first bin indicating whether or not a delta quantization parameter is significant, a sign bin indicating whether the delta quantization parameter is positive or negative, and other bins indicating an absolute value of the delta quantization parameter,

**characterized in that** the quantization parameter decoding means (22) performs the binary arithmetic decoding using no context for the sign bin and using a context for each of the first bin and the other bins.

5. A video quantization parameter encoding program for causing a computer to execute the video quantization parameter encoding method according to claim 1.

6. A video quantization parameter decoding program for causing a computer to execute the video quantization parameter decoding method according to claim 2.

**Patentansprüche**

1. Ein Codierverfahren für Videoquantisierungsparameter zum codieren eines Quantisierungsparameters für ein Videocodierverfahren, das basiert auf kontextbasiertem adaptiven binären arithmetischen Codieren, wobei das Videoquantisierungsparameter-Codierverfahren aufweist:

Erzeugen eines vorhergesagten Quantisierungsparameters aus einem vergangenen rekonstruierten Quantisierungsparameter;

Erzeugen eines Delta-Quantisierungsparameters aus einem Quantisierungsparameter und dem vorhergesagten Quantisierungsparameter; und

binäres arithmetisches Codieren eines ersten Bins, das angibt, ob oder ob nicht der Delta- Quantisierungsparameter signifikant ist, und für den Fall, dass der Delta-Quantisierungsparameter signifikant ist, binäres arithmetisches Codieren eines Vorzeichen-Bins, das angibt, ob der Delta-Quantisierungsparameter positiv oder negativ ist, und anderer Bins, die einen absoluten Wert des Delta-Quantisierungsparameters angeben,

**dadurch gekennzeichnet, dass** das binäre arithmetische Codieren durchgeführt wird unter Verwendung von Kontext für das erste Bin und die anderen Bins und unter Verwendung von keinem Kontext für das Vorzeichen-Bin.

2. Ein Videoquantisierungsparameter-Decodierverfahren zum Decodieren eines Quantisierungsparameters für ein Videocodierverfahren, das basiert auf kontextbasiertem adaptiven binären arithmetischen Codieren, wobei das Videoquantisierungsparameter-Decodierverfahren aufweist:

Erzeugen eines vorhergesagten Quantisierungsparameters aus einem vergangenen rekonstruierten Quantisierungsparameter; und

binäres arithmetisches Decodieren eines ersten Bins, das angibt, ob oder ob nicht ein Delta-Quantisierungsparameter signifikant ist, eines Vorzeichen-Bins, das angibt, ob der Delta-Quantisierungsparameter positiv oder negativ ist, und anderer Bins, die einen absoluten Wert des Delta-Quantisierungsparameters angeben,

**dadurch gekennzeichnet, dass** das binäre arithmetische Decodierverfahren unter Verwendung von Kontext für das erste Bin und die anderen Bins durchgeführt wird und unter Verwendung von keinem Kontext für das Vorzeichen-Bin durchgeführt wird.

3. Ein Videoquantisierungsparameter-Codierer zum Codieren eines Quantisierungsparameters für ein Videocodierverfahren, wobei der Videoquantisierungsparameter-Codierer basiert auf kontextbasiertem adaptiven binären arithmetischen Codieren und aufweist:

Vorhersagemittel (11) zum Erzeugen eines vorhergesagten Quantisierungsparameters aus einem vergangenen rekonstruierten Quantisierungsparameter;
Berechnungsmittel (12) zum Erzeugen eines Delta-Quantisierungsparameters aus einem Quantisierungsparameter und dem vorhergesagten Quantisierungsparameter; und
Quantisierungsparameter-Codiermittel (13) zum binären arithmetischen Codieren eines ersten Bins, das angibt, ob oder ob nicht der Delta- Quantisierungsparameter signifikant ist und für den Fall, dass der Delta- Quantisierungsparameter signifikant ist, zum binären arithmetischen Codieren eines Vorzeichen-Bins, das angibt, ob der Delta-Quantisierungsparameter positiv oder negativ ist, und anderer Bins, die einen absoluten Wert des Delta-Quantisierungsparameters angeben,
**dadurch gekennzeichnet, dass** das Quantisierungsparameter-Codiermittel (13) das binäre arithmetische Codieren durchführt unter Verwendung von Kontext für das erste Bin und die anderen Bins und unter Verwendung von keinem Kontext für das Vorzeichen-Bin.

4. Ein Videoquantisierungsparameter-Decoder zum Decodieren eines Quantisierungsparameters für ein Videodecodierverfahren, wobei der Videoquantisierungsparameter-Decoder basiert auf kontextbasiertem adaptiven binären arithmetischen Codieren und aufweist:

Vorhersagemittel (21) zum Erzeugen eines vorhergesagten Quantisierungsparameters aus einem vergangenen rekonstruierten Quantisierungsparameter; und
Quantisierungsparameter-Decodiermittel (22) zum binären arithmetischen Decodieren eines ersten Bins, das angibt, ob oder ob nicht ein Delta-Quantisierungsparameter signifikant ist, eines Vorzeichen-Bins, das angibt, ob der Delta-Quantisierungsparameter positiv oder negativ ist und anderer Bins, die einen absoluten Wert des Delta-Quantisierungsparameters angeben, und eines Vorzeichen-Bins, das den anderen Bins nachfolgt und angibt, ob der Delta-Quantisierungsparameter positiv oder negativ ist,
**dadurch gekennzeichnet, dass** das binäre arithmetische Decodierverfahren unter Verwendung von Kontext für das erste Bin und die anderen Bins durchgeführt wird und unter Verwendung von keinem Kontext für das Vorzeichen-Bin durchgeführt wird.

5. Ein Videoquantisierungsparameter-Codierprogramm zum Veranlassen eines Computers zum Ausführen eines Videoquantisierungsparametercodierverfahrens nach Anspruch 1.

6. Ein Videoquantisierungsparameter-Decodierprogramm zum Veranlassen eines Computers zum Ausführen des Videoquantisierungsparemeter-Decodierverfahrens nach Anspruch 2.

**Revendications**

1. Procédé d'encodage de paramètre de quantification de vidéo pour encoder un paramètre de quantification pour un processus d'encodage vidéo qui est basé sur un codage arithmétique binaire adaptatif basé sur le contexte, le procédé d'encodage de paramètre de quantification de vidéo comprenant :

générer un paramètre de quantification prédit à partir d'un paramètre de quantification reconstruit passé ;
générer un paramètre de quantification delta à partir d'un paramètre de quantification et du paramètre de quantification prédit ; et
encoder arithmétique binaire un premier fichier indiquant si le paramètre de quantification delta est significatif ou non, et dans le cas où le paramètre de quantification delta est significatif, encoder arithmétique binaire un fichier de signe, qui indique si le paramètre de quantification delta est positif ou négatif, et d'autres fichiers, indiquant une valeur absolue du paramètre de quantification delta, **caractérisé en ce que** l'encodage arithmétique binaire est réalisé en utilisant un contexte pour le premier fichier et les autres fichiers, et en n'utilisant aucun contexte pour le fichier de signe.

EP 2 728 864 B1

**2.** Procédé de décodage de paramètre de quantification de vidéo pour décoder un paramètre de quantification pour un processus de décodage vidéo qui est basé sur un codage arithmétique binaire adaptatif basé sur le contexte, le procédé de décodage de paramètre de quantification de vidéo comprenant :

la génération d'un paramètre de quantification prédit à partir d'un paramètre de quantification reconstruit passé ;
le décodage arithmétique binaire d'un premier fichier indiquant si un paramètre de quantification delta est significatif ou non, d'un fichier de signe qui indique si le paramètre de quantification delta est positif ou négatif, et d'autres fichiers, indiquant une valeur absolue du paramètre de quantification delta, **caractérisé en ce que** le décodage arithmétique binaire est réalisé en utilisant un contexte pour le premier fichier et les autres fichiers, et en n'utilisant aucun contexte pour le fichier de signe.

**3.** Encodeur de paramètre de quantification de vidéo pour encoder un paramètre de quantification pour un processus d'encodage vidéo dans lequel l'encodeur de paramètre de quantification de vidéo est basé sur un codage arithmétique binaire adaptatif basé sur le contexte et comprenant :

des moyens de prédiction (11) pour générer un paramètre de quantification prédit à partir d'un paramètre de quantification reconstruit passé ;
des moyens de calcul (12) pour générer un paramètre de quantification delta à partir d'un paramètre de quantification et du paramètre de quantification prédit ; et
des moyens d'encodage de paramètre de quantification (13) pour opérer un encodage arithmétique binaire sur un premier fichier indiquant si le paramètre de quantification delta est significatif ou non et dans le cas où le paramètre de quantification delta est significatif, pour opérer un encodage arithmétique binaire sur un fichier de signe, qui indique si le paramètre de quantification delta est positif ou négatif, et d'autres fichiers, indiquant une valeur absolue du paramètre de quantification delta, **caractérisé en ce que** le moyen d'encodage de paramètre de quantification (13) réalise l'encodage arithmétique binaire en utilisant un contexte pour le premier fichier et les autres fichiers, et en n'utilisant aucun contexte pour le fichier de signe.

**4.** Décodeur de paramètre de quantification de vidéo pour décoder un paramètre de quantification pour un processus de décodage vidéo dans lequel le décodeur de paramètre de quantification de vidéo est basé sur un codage arithmétique binaire adaptatif basé sur le contexte, et comprenant :

des moyens de prédiction (21) pour générer un paramètre de quantification prédit à partir d'un paramètre de quantification reconstruit passé ; et
des moyens de décodage de paramètre de quantification (22) pour opérer un décodage arithmétique binaire sur un premier fichier indiquant si un paramètre de quantification delta est significatif ou non, d'un fichier signe qui indique si le paramètre de quantification delta est positif ou négatif, et d'autres fichiers, indiquant une valeur absolue du paramètre de quantification delta, et un fichier de signe, qui est ultérieur aux autres fichiers, indiquant si le paramètre de quantification delta est positif ou négatif,
**caractérisé en ce que** le décodage arithmétique binaire est réalisé en utilisant un contexte pour le premier fichier et les autres fichiers, et en n'utilisant aucun contexte pour le fichier de signe.

**5.** Programme d'encodage de paramètre de quantification de vidéo destiné à amener un ordinateur pour exécuter un procédé d'encodage de paramètre de quantification de vidéo selon la revendication 1.

**6.** Programme de décodage de paramètre de quantification de vidéo destiné à amener un ordinateur pour exécuter un procédé de décodage de paramètre de quantification de vidéo selon la revendication 2.

# FIG. 1

EP 2 728 864 B1

# FIG. 2

```
        ┌───────────┐
        │   START   │
        └─────┬─────┘
              │
              ▼
┌─────────────────────────────┐
│         BINARIZE            │──── S101
└──────────────┬──────────────┘
               │
               ▼
┌─────────────────────────────┐
│  ADAPTIVE BINARY ARITHMETIC │──── S102
│      CODE FIRST bin         │
└──────────────┬──────────────┘
               │
               ▼            S103
          ◇───────────────◇
         ╱     DELTA        ╲        NO
        ◇ QUANTIZATION PARAMETER ◇──────┐
         ╲  IS SIGNIFICANT? ╱           │
          ◇───────┬────────◇            │
               YES│                     │
                  ▼                     │
┌─────────────────────────────┐         │
│ BINARY ARITHMETIC CODE      │── S104   │
│       SECOND bin            │         │
└──────────────┬──────────────┘         │
               │                        │
               ▼                        │
┌─────────────────────────────┐         │
│  ADAPTIVE BINARY ARITHMETIC │── S105   │
│    CODE SUBSEQUENT bin      │         │
└──────────────┬──────────────┘         │
               │            S106        │
               ▼                        │
          ◇───────────────◇     NO      │
         ╱ ALL bins HAVE    ╲───────────┘
         ╲ BEEN CODED?      ╱
          ◇───────┬────────◇
               YES│
                  ▼
        ┌───────────┐
        │    END    │
        └───────────┘
```

# FIG. 3

| BIN STRING INDEX | BIN STRING | | | | | | | | | | DQP |
|---|---|---|---|---|---|---|---|---|---|---|---|
| | 1st | 2nd | 3rd | 4th | 5th | 6th | 7th | ••• | 26th | 27th | |
| 1 | 0 | | | | | | | | | | 0 |
| 2 | 1 | ✕ | 0 | | | | | | | | 1 or –1 |
| 3 | 1 | ✕ | 1 | 0 | | | | | | | 2 or –2 |
| 4 | 1 | ✕ | 1 | 1 | 0 | | | | | | 3 or –3 |
| 5 | 1 | ✕ | 1 | 1 | 1 | 0 | | | | | 4 or –4 |
| 6 | 1 | ✕ | 1 | 1 | 1 | 1 | 0 | | | | 5 or –5 |
| | ••• | | | | | | | | | | |
| 26 | 1 | ✕ | 1 | 1 | 1 | 1 | 1 | ••• | 1 | 0 | 25 or –25 |
| 27 | 1 | ✕ | 1 | 1 | 1 | 1 | 1 | ••• | 1 | 1 | 26 or –26 |
| CONTEXT INDEX | 0 | na | 2 | 3 | 4 | 5 | 6 | ••• | 27 | 28 | |

# FIG. 4

CODED DATA

212

204 — ADAPTIVE BINARY ARITHMETIC DECODER

205 — BINARY ARITHMETIC DECODER

bin

bin

211

bin string

2031 — DE-BINARIZER

DELTA QUANTIZATION PARAMETER

PREDICTED QUANTIZATION PARAMETER

201 — PREDICTOR

202 — BUFFER

RECONSTRUCTED QUANTIZATION PARAMETER

# FIG. 5

```
                    START

        ADAPTIVE BINARY ARITHMETIC        S201
           DECODE FIRST bin

                                    S202
                                           NO
          VALUE OF FIRST bin IS 1?

                    YES

     BINARY ARITHMETIC DECODE SECOND bin   S203

        ADAPTIVE BINARY ARITHMETIC        S204
         DECODE SUBSEQUENT bin

                                    S205
                                           NO
          ALL bins HAVE BEEN DECODED?

                    YES

                DE-BINARIZE               S206

                    END
```

# FIG. 6

EP 2 728 864 B1

# FIG. 7

# FIG. 8

```
                    ┌──────────────┐
                    │    START     │
                    └──────┬───────┘
                           │
         ┌─────────────────▼─────────────────┐
         │  ADAPTIVE BINARY ARITHMETIC        │ ～S301
         │  DECODE FIRST bin                  │
         └─────────────────┬─────────────────┘
                           │            S302
                     ◇─────▼─────◇
                    ╱             ╲         NO
         ◇  VALUE OF FIRST bin IS 1?  ◇──────────┐
                    ╲             ╱              │
                     ◇─────┬─────◇               │
                           │ YES                 │
         ┌─────────────────▼─────────────────┐   │
         │  BINARY ARITHMETIC DECODE SECOND bin│ ～S303
         └─────────────────┬─────────────────┘   │
                           │                      │
         ┌─────────────────▼─────────────────┐   │
         │        COMPUTE cMax               │ ～S304
         └─────────────────┬─────────────────┘   │
                           │            S305      │
                     ◇─────▼─────◇                │
                    ╱  cMax IS     ╲      NO       │
         ◇  GREATER THAN OR EQUAL  ◇──────────────┤
                    ╲   TO 1?      ╱               │
                     ◇─────┬─────◇                │
                           │ YES                  │
         ┌─────────────────▼─────────────────┐   │
     ┌──▶│  ADAPTIVE BINARY ARITHMETIC        │ ～S306
     │   │  DECODE SUBSEQUENT bin             │   │
     │   └─────────────────┬─────────────────┘   │
     │                     │            S307      │
     │               ◇─────▼─────◇                │
     │              ╱             ╲      NO        │
     │   ◇  ALL BINS HAVE BEEN DECODED? ◇─────────┘
     └───────────────╲             ╱
                      ◇─────┬─────◇
                           │ YES
         ┌─────────────────▼─────────────────┐
         │         DE-BINARIZE               │ ～S308
         └─────────────────┬─────────────────┘
                           │
                    ┌──────▼───────┐
                    │     END      │
                    └──────────────┘
```

# FIG. 9

# FIG. 10

204 ADAPTIVE BINARY ARITHMETIC DECODER

205 BINARY ARITHMETIC DECODER

212

211

CODED DATA

bin

bin

bin string

2032 DE-BINARIZER

DELTA QUANTIZATION PARAMETER

PREDICTED QUANTIZATION PARAMETER

RANGE OF DELTA QUANTIZATION PARAMETER

206 RANGE DETERMINER

RANGE OF QUANTIZATION PARAMETER

201 PREDICTOR

202 BUFFER

RECONSTRUCTED QUANTIZATION PARAMETER

24

# FIG. 11

| BIN STRING INDEX | BIN STRING | | | | | | | | | | DQP |
|---|---|---|---|---|---|---|---|---|---|---|---|
| | 1st | 2nd | 3rd | 4th | 5th | 6th | 7th | ··· | 26th | 27th | |
| 1 | 0 | | | | | | | | | | 0 |
| 2 | 1 | ✕ | 0 | | | | | | | | 1 or –1 |
| 3 | 1 | ✕ | 1 | 0 | | | | | | | 2 or –2 |
| 4 | 1 | ✕ | 1 | 1 | 0 | | | | | | 3 or –3 |
| 5 | 1 | ✕ | 1 | 1 | 1 | 0 | | | | | 4 or –4 |
| 6 | 1 | ✕ | 1 | 1 | 1 | 1 | 0 | | | | 5 or –5 |
| ··· | | | | | | | | | | | |
| 26 | 1 | ✕ | 1 | 1 | 1 | 1 | 1 | ··· | 1 | 0 | 25 or –25 |
| 27 | 1 | ✕ | 1 | 1 | 1 | 1 | 1 | ··· | 1 | 1 | 26 or –26 |
| CONTEXT INDEX | 0 | na | 2 | 3 | 3 | 3 | 3 | ··· | 3 | 3 | |

# FIG. 12

# FIG. 13

# FIG. 14

# FIG. 15

EP 2 728 864 B1

# FIG. 16

| BIN STRING INDEX | BIN STRING | | | | | | | | | | | | | DQP |
|---|---|---|---|---|---|---|---|---|---|---|---|---|---|---|
| | 1st | 2nd | 3rd | 4th | 5th | 6th | 7th | ... | 49th | 50th | 51st | 52nd | 53rd | |
| 1 | 0 | | | | | | | | | | | | | 0 |
| 2 | 1 | 0 | | | | | | | | | | | | 1 |
| 3 | 1 | 1 | 0 | | | | | | | | | | | -1 |
| 4 | 1 | 1 | 1 | 0 | | | | | | | | | | 2 |
| 5 | 1 | 1 | 1 | 1 | 0 | | | | | | | | | -2 |
| 6 | 1 | 1 | 1 | 1 | 1 | 0 | | | | | | | | -3 |
| | | | | | | ... | | | | | | | | |
| 50 | 1 | 1 | 1 | 1 | 1 | 1 | 1 | ... | 1 | 0 | | | | 25 |
| 51 | 1 | 1 | 1 | 1 | 1 | 1 | 1 | ... | 1 | 1 | 0 | | | -25 |
| 52 | 1 | 1 | 1 | 1 | 1 | 1 | 1 | ... | 1 | 1 | 1 | 0 | | 26 |
| 53 | 1 | 1 | 1 | 1 | 1 | 1 | 1 | ... | 1 | 1 | 1 | 1 | 0 | -26 |
| CONTEXT INDEX | 0 | 2 | 3 | 3 | 3 | 3 | 3 | ... | 3 | 3 | 3 | 3 | 3 | |

EP 2 728 864 B1

**REFERENCES CITED IN THE DESCRIPTION**

**Patent documents cited in the description**

- EP 2536145 A

**Non-patent literature cited in the description**

- WD3: Working Draft 3 of High-Efficiency Video Coding. *JCTVC-E603, Joint Collaborative Team on Video Coding (JCT-VC) of ITU-T SG16 WP3 and ISO/IEC JTC 1/SC29/WG11 5th Meeting,* 16 March 2011